# EUROPÄISCHE PATENTSCHRIFT

(11) **EP 2 994 694 B1**
(45) Veröffentlichungstag und Bekanntmachung des Hinweises auf die Patenterteilung: **06.06.2018**
(21) Anmeldenummer: 14723351.4
(22) Anmeldetag: 24.04.2014
(51) Int. Cl.: F21V 7/00, F21V 17/16, F21V 19/00, F21Y 101/00

(54) **PLATTENFÖRMIGES REFLEKTORELEMENT FÜR LED-PLATINE**
FLAT REFLECTOR ELEMENT FOR AN LED CIRCUIT BOARD
ÉLÉMENT RÉFLECTEUR EN FORME DE PLAQUE POUR PLATINE À DEL

(30) Priorität: 26.04.2013 DE 202013101823 U
(43) Veröffentlichungstag der Anmeldung: 16.03.2016
(73) Patentinhaber: Zumtobel Lighting GmbH, 6850 Dornbirn (AT)
(72) Erfinder: FEURLE, Helmut, A-6934 Sulzberg (AT); KILGA, Marcel, A-6840 Götzis (AT); SPIEGEL, Michael, A-6850 Dornbirn (AT)
(74) Vertreter: Kiwit, Benedikt
(86) Internationale Anmeldenummer: PCT/EP2014/058381
(87) Internationale Veröffentlichungsnummer: WO 2014/174034

(56) Entgegenhaltungen:
- EP-A1- 2 434 196
- EP-A2- 2 208 924
- WO-A1-2012/032998
- WO-A1-2012/172688
- CN-U- 202 581 133
- GB-A- 2 479 142
- JP-A- 2013 015 768
- US-A1- 2009 273 735
- US-A1- 2013 051 016

## Beschreibung

Die vorliegende Erfindung betrifft ein plattenförmiges Reflektorelement, welches zur Verwendung mit einer LED-Platine, insbesondere zu deren Abdeckung vorgesehen ist. Die Anwendung eines derartigen Reflektorelements ist dabei insbesondere in Leuchten vorgesehen, bei denen mit Hilfe von LEDs eine flächige Lichtabgabe erzielt werden soll.

Kommen LEDs zu Beleuchtungszwecken zum Einsatz, so ist zu berücksichtigen, dass diese im Vergleich zu klassischen Lichtquellen wie Leuchtstofflampen oder dergleichen verhältnismäßig kleine Abmessungen aufweisen. LEDs werden oftmals auch als punktförmige Lichtquellen bezeichnet, welche sich dementsprechend nicht optimal für eine gleichmäßige Lichtabgabe über eine größere Fläche hinweg eignen. In diesem Fall ist erforderlich, eine Vielzahl von LEDs verteilt, beispielsweise matrixartig auf einer Platine anzuordnen, wobei dann in einem gewissen Abstand zu der Platine ein Lichtabstrahlelement angeordnet ist, welches derart lichtstreuend wirkt, dass die einzelnen LEDs nicht mehr als einzelne Lichtpunkte erkennbar sind. Derartige Leuchten sind mittlerweile in vielfältigster Form im Einsatz. Dokumente CN202581133U, JP2013015768A, GB2479142A, WO2012/032998A1, US2009/273735A1, US2013/051016A1 und EP2208924A2 offenbaren Reflektorelemente.

Grundsätzlich bestehen je nach Verschaltungsart der LEDs auf der entsprechenden Platine zwei Möglichkeiten, die LEDs zu betreiben. Bekannt ist ein Betrieb bei sogenannter Schutzkleinspannung, bei der also an den LEDs selbst sowie an den zuführenden Leitungen oder Leiterbahnen nur eine geringe Spannung anliegt, welche bei einem versehentlichen Berühren ungefährlich ist. In diesem Fall ist allerdings der Einsatz spezieller Betriebsgeräte erforderlich, welche verhältnismäßig teuer sind. Bevorzugt kommen deshalb sogenannte hochvoltbetriebene LED-Platinen zum Einsatz, bei denen an den entsprechenden Leitungen Spannungen anliegen, die für den Menschen ggf. gefährlich sein können. Entsprechende Schutznormen schreiben deshalb vor, dass Sicherheitsmaßnahmen zu treffen sind, die einen ausreichenden Schutz vor einem elektrischen Schlag gewährleisten. Dies führt zwar wiederum zu zusätzlichen Maßnahmen, da allerdings hochvoltbetriebene LED-Platinen in der Regel effizienter und kostengünstiger sind, stellt dies trotz allem die bevorzugte Variante für einen LED-Betrieb dar. Hierbei ist auch zu berücksichtigen, dass in der Regel auch bei Betrieb mit Schutzkleinspannung eine gewisse Abschirmung der LEDs vor äußeren Einflüssen, insbesondere vor einem versehentlichen Berühren erforderlich ist, um insbesondere sogenannte ESD-Schäden zu vermeiden.

Zur Realisierung eines entsprechenden Berührschutzes sind aus dem Stand der Technik unterschiedliche Varianten bekannt. Beispielsweise sind Lösungen bekannt, bei denen eine glasklare Kunststoffscheibe innerhalb der Leuchte vor der LED-Platine platziert ist. Ein derartiges Bauteil ist allerdings teuer und kann ggf. die Lichtabgabe beeinträchtigen und damit zu einer Reduzierung der Effizienz führen. Weiterhin ist aus dem Stand der Technik eine Verkapslung der LED-Platine bekannt. In diesem Fall wird die Platine in ein mit der lichtdurchlässigen Abdeckung verschraubtes Gehäuse eingesetzt, wodurch eine sogenannte Light-Engine gebildet wird. Diese wiederum wird in das eigentliche kastenförmige Leuchtengehäuse eingeschnappt, so dass eine doppelwandige Gehäusekonstruktion gebildet wird, durch welche ein versehentliches Berühren der LED-Platine ausgeschlossen wird. Zur Effizienzsteigerung wird in diesem Fall unmittelbar auf die LED-Platine eine hochreflektierende Folie aufgelegt, welche dass innerhalb der Light-Engine zurück reflektiertes Licht wiederum reflektiert und in Richtung der Lichtaustrittsfläche der Leuchte lenkt. Auch diese zweite Variante ist hinsichtlich ihres Aufbaus verhältnismäßig aufwendig und erfordert eine verhältnismäßig tiefe Ausgestaltung des Leuchtengehäuses.

Der vorliegenden Erfindung liegt deshalb die Aufgabenstellung zu Grunde, eine neuartige Lösung zur Bildung eines entsprechendes Berührschutzes für LED-Platinen zur Verfügung zu stellen, welche kostengünstiger realisierbar ist und trotz allem hinsichtlich ihrer lichttechnischen Eigenschaften zumindest mit den bekannten Lösungen vergleichbar ist.

Die Aufgabe wird durch ein plattenförmiges Reflektorelement, welches die Merkmale des Anspruchs 1 aufweist, gelöst. Vorteilhafte Weiterbildungen der Erfindung sind Gegenstand der abhängigen Ansprüche.

Erfindungsgemäß wird an Stelle der oben beschriebenen Lösungen ein Reflektorelement vorgeschlagen, welches ebenso wie die aus dem Stand der Technik bekannte reflektierende Folie flächig unmittelbar auf der LED-Platine angeordnet wird. Das Reflektorelement weist hierbei den Positionen der LEDs entsprechende Öffnungen auf, wobei erfindungsgemäß vorgesehen ist, dass am Umfang dieser Lichtdurchtrittsöffnungen jeweils vorstehende Berührschutzelemente angeordnet sind.

Gemäß der vorliegenden Erfindung wird deshalb ein plattenförmiges Reflektorelement zur flächigen Anordnung auf einer LED-Platine vorgeschlagen, wobei das Reflektorelement den Positionen der LEDs entsprechende Lichtdurchtrittsöffnungen aufweist und am Umfang der Lichtdurchtrittsöffnungen jeweils hervorstehende Berührschutzelemente angeordnet sind.

Im Vergleich zu einer einfachen reflektierenden Folie ist also das Reflektorelement gemäß der vorliegenden Erfindung strukturiert ausgebildet, so dass es einerseits die erforderliche Lichtabgabe ermöglicht, andererseits jedoch verhindert, dass die LEDs bzw. die spannungführenden Lötstellen für die LEDs versehentlich berührt werden. Da in der Regel alle weiteren Elemente der LED-Platine durch das Reflektorelement abgedeckt werden, besteht auch nicht die Gefahr einer versehentlichen Berührung der Leiterbahnen oder anderer stromführender Leitungen, so dass hierdurch ein zuverlässiger Schutz gegen einen elektrischen Stromschlag gegeben ist. Gleichzeitig wird aufgrund der nicht möglichen Berührung der LEDs sichergestellt, dass elektrostatische Entladungen nicht zu den bereits erwähnten ESD-Schäden führen können.

Die erfindungsgemäßen Berührschutzelemente sind durch am Umfang der Lichtdurchtrittsöffnungen verteilt angeordnete Rippen gebildet, wobei vorzugsweise jeweils vier Rippen vorgesehen sind. Der Lichtdurchtritt für das von der entsprechenden LED emittierte Licht ist hierbei verbessert, indem die Rippen zu der zugehörigen Lichtdurchtrittsöffnung hin zugespitzt ausgebildet sind. Weiterhin sind die Lichtdurchtrittsöffnungen trichterförmig ausgebildet bzw. weisen einen trichterförmigen Randbereich auf, um nur in einem möglichst kleinen Raumwinkelbereich die Lichtabgabe zu stören.

Gemäß einer weiteren vorteilhaften Weiterbildung der Erfindung ist das Reflektorelement derart ausgebildet, dass es an der Platine befestigt bzw. mit dieser verbunden werden kann, um eine Baueinheit zu bilden. Insbesondere können hierfür Mittel zum Verrasten mit der LED-Platine vorgesehen sein, welche vorzugsweise derart ausgeführt sind, dass ein Lösen der Verbindung zwischen Reflektorelement und Platine nur sehr aufwendig zu bewerkstelligen ist. Beispielsweise können hierzu mehrere Rastarme vorhanden sein, welche jeweils eine in der Platine vorgesehene Rastöffnung durchgreifen. Dabei können diese Raststifte ggf. auch derart bemessen sein, dass sie zusätzlich auch noch eine Montagefläche des zugehörigen Leuchtengehäuses durchgreifen und auf diesem Wege die gesamte Anordnung bestehend aus Reflektorelement und LED-Platine an dem Leuchtengehäuse befestigt wird. Dabei ist besonders vorteilhaft vorgesehen, dass die Rastarme mit Hilfe von Verriegelungsstiften arretiert werden können, welche als abreißbare Elemente an das Reflektorelement selbst angespritzt sind. Es sind also keine zusätzlichen Elemente erforderlich, die zum Verbinden zwischen Reflektorelement und LED-Platine erforderlich sind. Stattdessen kann werkzeuglos die Verbindung zwischen Einheiten vorgenommen werden, so dass letztendlich eine Baueinheit geschaffen wird, über welche effizient das LED-Licht abgegeben werden kann und gleichzeitig der geforderte Berührschutz gegeben ist.

Diese zusammengefügte Konstruktion kann dann ohne zusätzliche Schutzmaßnahmen in dem Gehäuse einer Leuchte angeordnet werden, so dass der entsprechende Aufwand im Vergleich zu den bislang bekannten Lösungen deutlich reduziert wird. Dabei erfüllt das Reflektorelement gleichzeitig auch die Funktion der aus dem Stand der Technik verwendeten hochreflektierenden Folie. Das heißt, innerhalb der Leuchte zurück reflektierte Lichtstrahlen, die auf das Reflektorelement fallen, werden wiederum derart umgelenkt, dass sie noch für die Lichtabgabe genutzt werden können. Die Effizienz der erfindungsgemäßen Lösung ist also auf jeden Fall gleichwertig zu aus dem Stand der Technik bekannten Konstruktionen. Das erfindungsgemäße Reflektorelement besteht dementsprechend vorzugsweise aus einem hochreflektierenden Kunststoffmaterial und kann beispielsweise im Spritzgussverfahren oder dergleichen hergestellt sowie ggf. zu einem späteren Zeitpunkt noch reflektierend beschichtet werden.

Nachfolgend soll die Erfindung anhand der beiliegenden Zeichnung näher erläutert werden. Es zeigen:
- Figur 1: eine Ansicht eines erfindungsgemäßen Reflektorelements;
- Figur 2: eine vergrößerte Darstellung des Reflektorelements von Figur 1;
- Figur 3: eine Darstellung des mit Hilfe der Berührschutzelemente gegebenen Berührschutzes bei dem erfindungsgemäßen Reflektorelement;
- Figuren 4 bis 6: Darstellungen zur Verwendung der an dem Reflektorelement vorgesehenen Rastelemente zur Verbindung mit der LED-Platine und
- Figuren 7 und 8: Ansichten einer Leuchte mit einer Baueinheit bestehend aus einer LED-Platine sowie einem erfindungsgemäßen Reflektorelement.

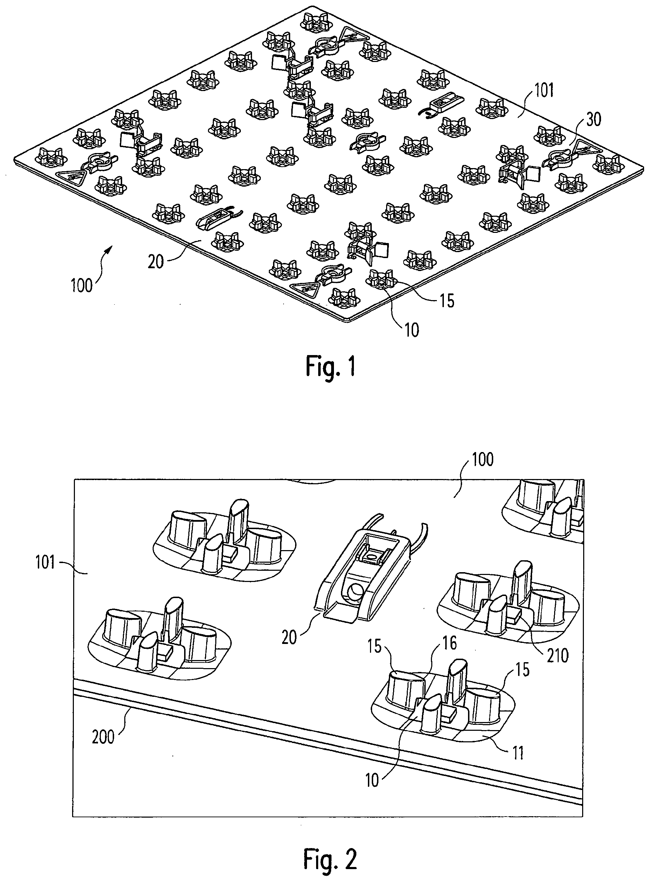

Das in Figur 1 dargestellte, allgemein mit dem Bezugszeichen 100 versehene erfindungsgemäße Reflektorelement soll wie bereits erwähnt zwei Funktionen erfüllen. Zum einen soll eine darunterliegende LED-Platine derart zuverlässig abgedeckt werden, dass ein Berührungsschutz und damit ein Schutz vor elektrischen Schlägen gegeben ist, wobei selbstverständlich die Lichtabgabe durch die LEDs möglichst wenig beeinträchtigt werden sollte. Gleichzeitig dient das Element 100 als klassischer Reflektor. Das heißt, innerhalb eines Leuchtengehäuses zurück geworfene Lichtstrahlen sollen von dem Reflektorelement 100 derart reflektiert werden, dass sie nach wie vor für die Lichtabgabe genutzt werden können. Die gesamte Leuchte soll hierdurch hinsichtlich ihrer Effizienz gesteigert werden.

Das Reflektorelement 100 ist dementsprechend an seiner der Lichtabstrahlöffnung der Leuchte zugewandten Seite bzw. Oberfläche, welche in Figur 1 dargestellt ist, reflektierend ausgebildet. Vorzugsweise handelt es sich um ein Kunststoffbauteil, welches im Spritzgussverfahren hergestellt wurde und mit einer geeigneten reflektierenden Beschichtung versehen ist.

Zu einem zuverlässigen Schutz der LED-Platine ist einerseits erforderlich, dass die LEDs bzw. die zugehörigen LED-Lötstellen nicht versehentlich berührt werden können. Darüber hinaus sollen selbstverständlich auch nicht die auf der LED-Platine verlaufenden weiteren Leiterbahnen oder Komponenten, welche ebenfalls eine Hochspannung führen, berührt werden können. Vorzugsweise ist deshalb das Reflektorelement hinsichtlich seiner Abmessungen an die Abmessungen der LED-Platine angepasst, wobei im Falle einer flächigen Anordnung mehrerer Platinen ggf. auch denkbar wäre, dass ein Reflektorelement gleichzeitig mehrere Platinen abdeckt und damit schützt. Der Einfachheit halber wird im nachfolgenden allerdings davon ausgegangen, dass dem Reflektorelement 100 genau eine darunter liegende LED-Platine zugeordnet ist, welche identische Abmessungen aufweist.

Die wesentlichen Komponenten auf der Oberfläche 101 des Reflektorelements 100 sind in Figur 1 sowie der vergrößerten Darstellung von Figur 2 gut erkennbar. Dabei ist wesentlich, dass den Positionen der LEDs auf der Platine entsprechende Lichtdurchtrittsöffnungen ausgebildet sind. Wie in Figur 2 erkennbar ist, ist jede Lichtdurchtrittsöffnung 10 derart positioniert, dass für den Fall, dass das Reflektorelement 100 unmittelbar auf der Oberfläche der Platine 200 aufliegt, die zugehörige LED 210 in die Durchtrittsöffnung 10 hineinragt. Die Lichtdurchtrittsöffnung 10 ist dabei derart bemessen, dass ein gewisser Sicherheitsabstand am Außenumfang jeder LED 210 verbleibt, so dass beim Aufsetzen des Reflektorelements 100 und Verbinden mit der Platine 200 keine Beschädigungen auftreten können. Gleichzeitig ist der verbleibende freie Randbereich allerdings auch nicht zu groß bemessen, um den angestrebten Berührschutz gewährleisten zu können.

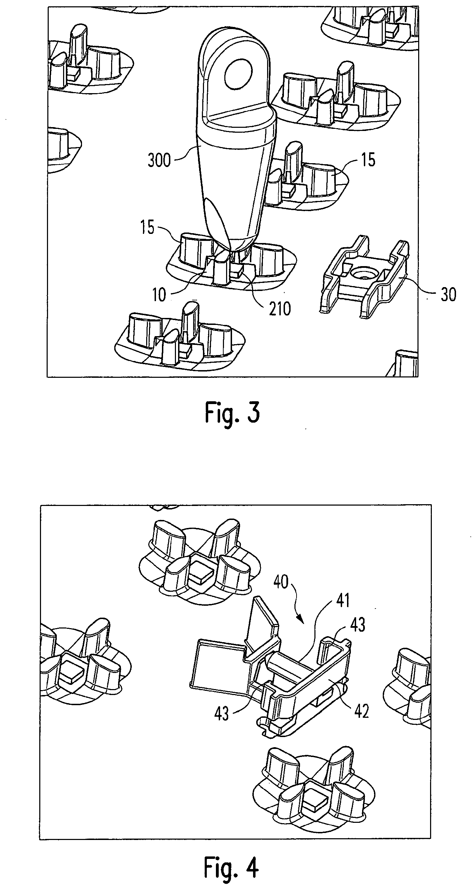

Dieser Berührschutz wird dadurch realisiert, dass am Außenumfang einer jeden Durchtrittsöffnung 10 mehrere Berührschutzelemente 15 angeordnet sind. In dem dargestellten Ausführungsbeispiel werden die Berührschutzelemente 15 durch vier verteilt am Umfang der Öffnung 10 angeordnete Rippen gebildet. Diese stehen von der Oberfläche 101 des Reflektorelements 100 leicht hervor und sind derart dimensioniert, dass ein Berühren der LED 210 bzw. der der LED 210 zugehörigen Lötstelle nicht möglich ist. Entsprechend der zugehörigen Norm muss hierbei gewährleistet sein, dass ein in Figur 3 dargestellter sog. Prüffinger 300, der hinsichtlich seiner Abmessungen normiert ist, unabhängig von seiner Ausrichtung nicht in Kontakt gegen die LED 210 bzw. die stromführenden Bereiche gelangen kann. Die Rippen 15 müssen hierzu eine entsprechende Höhe sowie untereinander einen entsprechenden ausreichend geringen Abstand aufweisen, so dass - wie in Figur 3 dargestellt - die Spitze 301 des Prüffingers 300 in jedem Fall durch die Rippen 15 blockiert wird. Da alle weiteren Elemente der darunterliegenden LED-Platine 200 ohnehin durch das Reflektorelement 100 abgedeckt sind, ist ein versehentliches Berühren der Oberfläche der LED-Platine 200 somit verhindert, so dass einerseits keine elektrischen Schläge selbst bei hochvoltbetriebenen LED-Platinen zu befürchten sind. Andererseits werden versehentliche ESD-Schäden an den LEDs 210 vermieden.

Selbstverständlich sollten die vorgesehenen Schutzmaßnahmen, insbesondere die Berührschutz-Rippen 15 die Lichtabgabe möglichst wenig beeinträchtigen. Hierfür sind zwei Maßnahmen vorgesehen, die in Figur 2 erkennbar sind. So sind einerseits die den LEDs 210 bzw. der Lichtdurchtrittsöffnung 10 zugewandten Endbereiche 16 der Berührschutz-Rippen 15 zugespitzt ausgebildet. Andererseits weißt jede Lichtdurchtrittsöffnung 10 einen trichterförmig ausgebildeten Randbereich 11 auf. Da von den LEDs 210 Licht in einen verhältnismäßig großen Winkelbereich abgegeben wird, kann eine zumindest geringe Beeinflussung der Lichtabgabe durch das Berührschutzelement 15 nicht verhindert werden. Die beschriebenen Maßnahmen führen allerdings dazu, dass der Einfluss äußerst gering gehalten wird.

Selbstverständlich wäre auch denkbar, die Berührschutzelemente anderweitig zu gestalten bzw. hinsichtlich ihrer Anzahl zu variieren, sofern nach wie vor eine versehentliche Berührung der LEDs ausgeschlossen ist.

Die für die Lichtabgabe und den Berührschutz verantwortlichen Komponenten, also die Durchtrittsöffnungen 10 sowie die Berührschutz-Rippen 15 stellen die wesentlichen Bestandteile des erfindungsgemäßen Reflektorelements 100 dar. Gleichzeitig weißt das Reflektorelement 100 allerdings noch weitere Besonderheiten auf, welche nachfolgend näher erläutert werden sollen.

Zum Einen kommen in der Regel LED-Platinen zum Einsatz, welche von der Oberseite her, also von derjenigen Seite, auf der auch die LEDs 210 angeordnet sind, kontaktiert werden. In diesem Fall sind - wie in Figur 2 erkennbar - an den entsprechenden Positionen des Reflektorelements 100 entsprechende Anschlussklemmbereiche 20 ausgebildet, über welche ein entsprechendes Kontaktieren der darunterliegenden LED-Platine 200 vorgenommen werden kann. Die LED-Platine 200 muss also diesbezüglich nicht modifiziert werden.

Des Weiteren ist vorzugsweise vorgesehen, dass das Reflektorelement 100 derart mit der Platine 200 verbunden wird, dass eine fest zusammengefügte Einheit gebildet wird, welche auch nicht ohne Weiteres wieder voneinander getrennt werden kann. Nur unter größerem Aufwand soll das Reflektorelement 100 wieder von der Platine 200 gelöst werden können, so auch dass diesbezüglich die entsprechenden Schutzvoraussetzungen erfüllt sind.

Dabei ist gemäß einem besonders bevorzugten Ausführungsbeispiel der Erfindung vorgesehen, dass das Reflektorelement 100 selbst die entsprechenden Mittel zur Verbindung zwischen LED-Platine 200 und Reflektorelement 100 bereitstellt. Hierfür kommen entsprechende Rastelemente zum Einsatz, welche mittels zusätzlicher Verriegelungsstifte verriegelt werden.

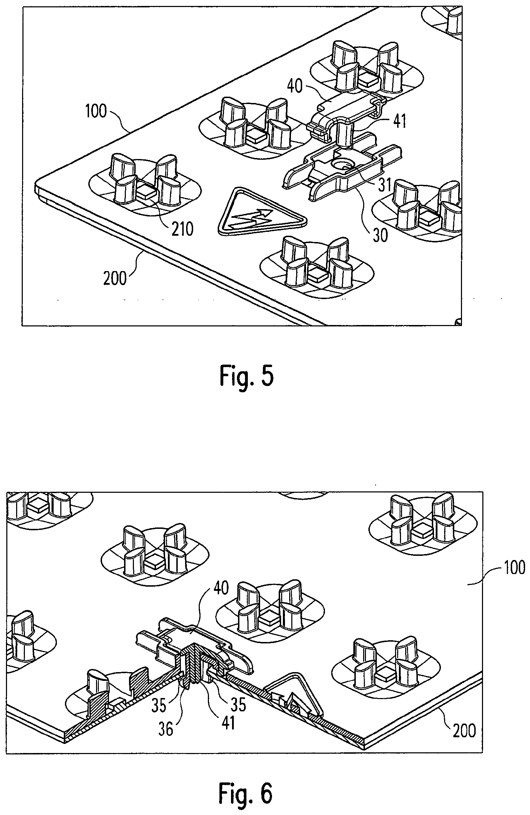

Diese - im vorliegenden Beispiel vier - Rastelemente sind zunächst in Figur 1 mit dem Bezugszeichen 30 versehen. Näher erkennbar ist ein Rastelement 30 beispielsweise in Figur 3 oder Figur 5. Dabei weist das entsprechende Rastelement 30 von der Oberseite her gesehen in erster Linie eine Öffnung 31 auf, welche zum Einführen eines speziellen Verriegelungsstifts genutzt wird. Zunächst allerdings wird entsprechend der Schnittdarstellung von Figur 6 ein Verrasten mit der darunterliegenden LED-Platine 20 dadurch erzielt, dass jedes Rastelement 30 nach unten überstehende Rastarme 35 mit einem endseitigen, ach außen vorstehenden Vorsprung 36 aufweist. Diese Rastarme 35 durchgreifen beim Aufsetzten des Reflektorelements 100 auf die LED-Platine 200 eine entsprechende Öffnung in der LED-Platine 200 und hintergreifen diese dann mit Ihren Vorsprüngen 36. Auf diesem Weg wird in einem ersten Schritt eine Rastverbindung zwischen Reflektorelement 100 und Platine erzielt 200. Um ein Lösen der auf diesem Wege gebildeten Einheit zu verhindern sind zusätzliche Verriegelungsstifte 40 vorgesehen, welche vorzugsweise durch das Reflektorelement 100 selbst zur Verfügung gestellt werden. Diese Stifte 40 sind deshalb an das Reflektorelement 100 angespritzt und können durch einfaches Abreißen entfernt werden. Selbstverständlich stehen genau so viele Verriegelungsstifte 40 zur Verfügung, wie Rastelemente 30 an dem Reflektorelement 100 vorgesehen sind.

Nach dem Abreißen eines Verriegelungsstifts 40 wird dann dieser mit seinem zapfenförmigen Bereich 41 von der Oberseite her in die Öffnung 31 der Rastmittel 30 eingeführt. Er drückt hierbei die Verriegelungsarme 35 nach außen, so dass diese nicht mehr zurückschwenken und damit die Verriegelung mit der LED-Platine 200 freigegeben können. Gleichzeitig weist der Verriegelungsstift 40 einen oberen Quersteg 42 mit an seinen beiden Enden ausgebildeten Rastvorsprüngen 43 auf. Diese hintergreifen bei eingeschobenem Verriegelungsstift 40 entsprechende Vorsprünge an den Rastmitteln 30, so dass auch der Verriegelungsstift 40 nicht mehr ohne größeren Aufwand herausgezogen werden kann. Letztendlich ist dann also ein Trennen der Baueinheit bestehend aus Reflektorelement 100 und LED-Platine 200 nur noch mit großem Aufwand möglich.

Anzumerken ist, dass selbstverständlich die erwähnten Verriegelungsstifte 40 auch als separate Bauteile zur Verfügung gestellt werden könnten. Durch das Anordnen auf dem Reflektorelement 100 allerdings ist gewährleistet, dass die zur Verriegelung zwischen Reflektorelement 100 und LED-Platine 200 erforderlichen Mittel unmittelbare zur Verfügung stehen.

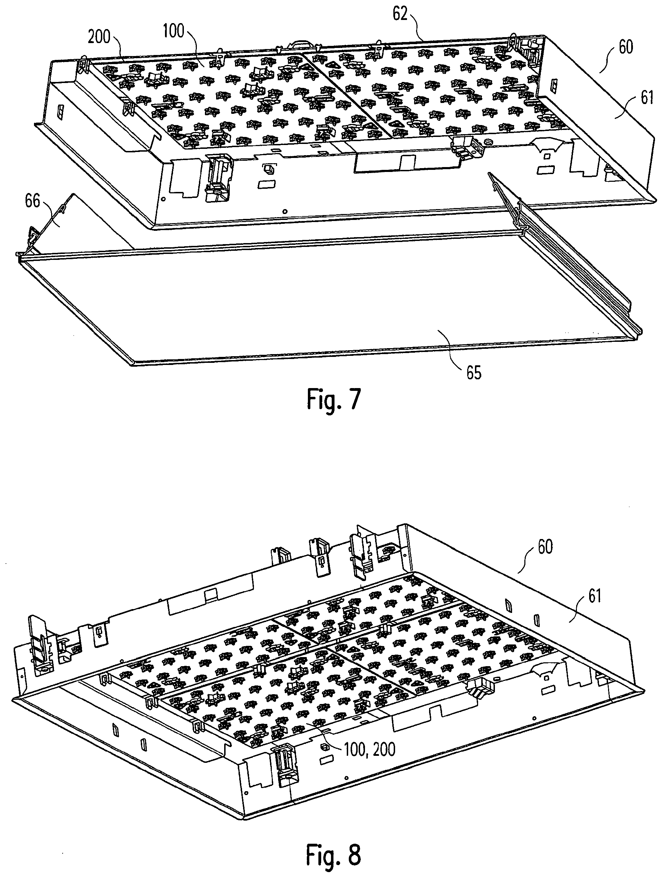

Die Baueinheit bestehend aus Reflektorelement 100 und darunterliegende LED-Platine 200 kann dann in ein Leuchtengehäuse eingesetzt werden, wie die Darstellungen der Figuren 7 und 8 zeigen. Dargestellt ist eine Anbauleuchte 60 mit einem kastenförmigen Leuchtengehäuse 61, welches an seiner Lichtaustrittsöffnung durch ein Lichtabstrahlelement 62 verschlossen ist. Im dargestellten Ausführungsbeispiel sind vier Platinen mit zugehörigen Reflektorelementen 100 an der Bodenfläche 62 des Leuchtengehäuses befestigt. Daher ist vorzugsweise vorgesehen, dass die oben erwähnten Rastmittel, insbesondere die Rastarme 35 gleichzeitig auch zur Verankerung an dem Leuchtengehäuse 60 genutzt werden. Die Rastarme 35 durchgreifen also zusätzlich auch noch entsprechende Öffnungen in der Bodenfläche 62 des Gehäuses 60 und werden dann anschließend mittels der erwähnten Verriegelungsstifte 40 blockiert. Die Baueinheit ist also zusätzlich auch an dem Gehäuse 60 gesichert, ohne dass weitere Befestigungsmaßnahmen erforderlich wären.

Von dem Lichtaustrittselement 65 erstrecken sich seitlich nach innen geneigte Reflektoren 66 bis zur Bodenfläche 62 des Gehäuses zu dem jeweiligen Rand der Reflektorelement-LED-Platine-Baueinheit. In dem hierdurch gebildeten Hohlraum verlaufende, rückreflektierte Lichtstrahlen werden dann durch die reflektierende Oberfläche des Reflektorelements 100 wiederum zurückgeworfen, so dass diese nach wie vor über das transparente Lichtaustrittselement 65 abgegeben werden können.

Gleichzeitig wird durch diese Mehrfachreflexionen die Lichtabgabe der Leuchte 60 hinsichtlich ihrer Homogenität verbessert.

Dadurch, dass das Reflektorelement und die zugehörige LED-Platine eine nahezu unlösbare Einheit bilden, kann auf weitere Schutzmaßnahmen hinsichtlich der Platinen verzichtet werden. Es ist also offensichtlich, dass hierdurch ein sehr einfacher und damit kostengünstiger Aufbau für derartige LED-Leuchten erhalten wird. Gleichzeitig ist allerdings die erfindungsgemäße Lösung hinsichtlich ihrer Lichtabgabeeigenschaften zumindest gleichwertig zu bislang bekannten Lösungen anzusehen.

## Patentansprüche

1. Plattenförmiges Reflektorelement (100) zur flächigen Anordnung auf einer LED-Platine (200), wobei das Reflektorelement (100) den Positionen der LEDs entsprechende Lichtdurchtrittsöffnungen (10) aufweist und am Umfang der Lichtdurchtrittsöffnungen (10) jeweils hervorstehende Berührschutzelemente (15) angeordnet sind,
wobei die Berührschutzelemente (15) durch am Umfang der Lichtdurchtrittsöffnungen (10) verteilt angeordnete Rippen gebildet sind, und **dadurch gekennzeichnet, dass** die Rippen zu der zugehörigen Lichtdurchtrittsöffnung (10) hin zugespitzt ausgebildet sind und die Lichtdurchtrittsöffnungen (10) einen trichterförmigen Randbereich (11) aufweisen, so dass die Berührschutzelemente (15) eine Lichtabgabe möglichst wenig beeinträchtigen.

2. Plattenförmiges Reflektorelement nach Anspruch 1,
**dadurch gekennzeichnet,**
**dass** am Umfang der Lichtdurchtrittsöffnungen (10) jeweils vier Rippen vorgesehen sind.

3. Plattenförmiges Reflektorelement nach einem der vorherigen Ansprüche,
**dadurch gekennzeichnet,**
**dass** dieses aus einem hochreflektierenden Material, insbesondere aus Kunststoff besteht.

4. Plattenförmiges Reflektorelement nach einem der vorherigen Ansprüche, **dadurch gekennzeichnet,**
**dass** diese Mittel zum Verrasten (30) mit der LED-Platine (200) aufweist.

5. Plattenförmiges Reflektorelement nach Anspruch 4,
**dadurch gekennzeichnet,**
**dass** die Mittel zum Verrasten (30) Rastarme (35) umfassen, welche eine in der Platine (200) vorgesehene Rastöffnung durchgreifen.

6. Plattenförmiges Reflektorelement nach Anspruch 5,
**dadurch gekennzeichnet,**
**dass** die Rastarme (35) derart dimensioniert sind, dass sie gleichzeitig auch eine in einer Montagefläche (62) eines Leuchtengehäuses (60) vorgesehene Rastöffnung durchgreifen.

7. Plattenförmiges Reflektorelement nach Anspruch 5 oder 6,
**dadurch gekennzeichnet,**
**dass** die Mittel zum Verrasten weiterhin Verriegelungsstifte (40) umfassen, welche die Rastarme (35) in einer Rastposition arretieren.

8. Plattenförmiges Reflektorelement nach Anspruch 7,
**dadurch gekennzeichnet,**
**dass** die Verrieglungsstifte (40) als abreißbare Elemente an dem Reflektorelement (100) angespritzt sind.

9. Kombination bestehend aus einer LED-Platine (200) und einem plattenförmigen Reflektorelement (100) nach einem der vorherigen Ansprüche.

10. Leuchte mit einem Leuchtengehäuse (60) sowie einer darin angeordneten LED-Platine (200), wobei auf der LED-Platine (200) ein plattenförmiges Reflektorelement (100) gemäß einem der Ansprüche 1 bis 8 angeordnet ist.

11. Leuchte nach Anspruch 10,
**dadurch gekennzeichnet,**
**dass** die LED-Platine (200) mittels des plattenförmigen Reflektorelements (100) an dem Leuchtengehäuse (60) befestigt ist.

## Claims

1. Plate-shaped reflector element (100) for planar arrangement on an LED board (200), wherein the reflector element (100) comprises the positions of the light passage openings (10) corresponding to the LEDs, while contact protection elements (15) respectively protrude on the circumference of the light passage openings (10),
wherein the contact protection elements (15) are formed by ribs distributed on the circumference of the light passage openings (10), and
**characterized in that**
the ribs are tapered towards the associated light passage opening (10) and the light passage openings (10) comprise a funnel-shaped edge region (11) so that the contact protection elements (15) interfere as little as possible with the light output.

2. Plate-shaped reflector element according to claim 1,
**characterized in that**
four ribs are respectively provided on the circumference of the light passage openings (10).

3. Plate-shaped reflector element according to one of the preceding claims,
**characterized in that**
it consists of a highly reflective material, in particular of plastic.

4. Plate-shaped reflector element according to one of the preceding claims,
**characterized in that**
it comprises means for latching (30) to the LED board (200).

5. Plate-shaped reflector element according to claim 4,
**characterized in that**
the latching means (30) comprise latching arms (35) which pass through a latching opening provided in the circuit board (200).

6. Plate-shaped reflector element according to claim 5,
**characterized in that**
the latching arms (35) are so dimensioned that they also simultaneously engage in a latching opening provided in a mounting surface (62) of a luminaire housing (60).

7. Plate-shaped reflector element according to claim 5 or 6,
**characterized in that**
the means for latching further comprise locking pins (40) which lock the latching arms (35) in a latching position.

8. Plate-shaped reflector element according to claim 7,
**characterized in that**
the locking pins (40) are molded onto the reflector element (100) in the form of breakable elements.

9. Combination consisting of an LED board (200) and a plate-shaped reflector element (100) according to one of the preceding claims.

10. Luminaire with a luminaire housing (60) as well as an LED board (200) arranged therein, wherein a plate-shaped reflector element (100) according to one of claims 1 to 8, is arranged on the LED board (200).

11. Luminaire according to claim 10,
**characterized in that**
the LED board (200) is fastened to the luminaire housing (60) by means of the plate-shaped reflector element (100).

## Revendications

1. Élément réflecteur en forme de plaque (100) pour la disposition plane sur une platine à LED (200), l'élément réflecteur (100) comprenant des ouvertures de passage de lumière (10) correspondant aux positions des LED et, sur la circonférence des ouvertures de passage de lumière (10), des éléments de protection contre le contact (15) étant disposés en saillie,
les éléments de protection contre le contact (15) étant constitués de nervures disposées de manière répartie sur la circonférence des ouvertures de passage de lumière (10) et
**caractérisé en ce que**
les nervures sont réalisées de façon à être orientées vers chaque ouverture de passage de lumière (10) correspondante et les ouvertures de passage de lumière (10) présentant un bord (11) en forme d'entonnoir, de façon à ce que les éléments de protection contre le contact (15) influencent le moins possible l'émission de lumière.

2. Élément réflecteur en forme de plaque selon la revendication 1,
**caractérisé en ce que**
quatre nervures sont prévues sur la circonférence des ouvertures de passage de lumière (10).

3. Élément réflecteur en forme de plaque selon l'une des revendications précédentes,
**caractérisé en ce que**
celui-ci est constitué d'un matériau hautement réfléchissant, plus particulièrement d'une matière plastique.

4. Élément réflecteur en forme de plaque selon l'une des revendications précédentes,
**caractérisé en ce que**
celui-ci comprend des moyens pour l'encliquetage (30) avec la platine à LED (200).

5. Élément réflecteur en forme de plaque selon la revendication 4,
**caractérisé en ce que** les moyens d'encliquetage (30) comprennent des bras d'encliquetage (35) qui traversent une ouverture d'encliquetage prévue dans la platine (200).

6. Élément réflecteur en forme de plaque selon la revendication 5,
**caractérisé en ce que**
les bras d'encliquetage (35) sont dimensionnés de façon à ce qu'ils traversent en même temps également une ouverture d'encliquetage prévue dans une surface de montage (62) d'un boîtier de luminaire (60).

7. Élément réflecteur en forme de plaque selon la revendication 5 ou 6,
**caractérisé en ce que**
les moyens pour l'encliquetage comprennent en outre des goupilles de verrouillage (40) qui bloquent les bras d'encliquetage (35) dans une position d'encliquetage.

8. Élément réflecteur en forme de plaque selon la revendication 7,
**caractérisé en ce que**
les goupilles de verrouillage (40) sont surmoulées en tant qu'éléments réflecteurs (100) pouvant être arrachés.

9. Combinaison constituée d'une platine à LED (200) et d'un élément réflecteur en forme de plaque (100) selon l'une des revendications précédentes.

10. Luminaire avec un boîtier de luminaire (60) ainsi qu'une platine à LED (200) disposée à l'intérieur, un élément réflecteur (100) selon l'une des revendications 1 à 8 étant disposé sur la platine à LED (200).

11. Élément réflecteur en forme de plaque selon la revendication 10,
**caractérisé en ce que**
la platine à LED (200) est fixée sur le boîtier de luminaire (60) au moyen de l'élément réflecteur en forme de plaque (100).
